# NEUE EUROPÄISCHE PATENTSCHRIFT

(11) **EP 0 487 849 B2**
(45) Veröffentlichungstag und Bekanntmachung des Hinweises auf die Entscheidung über den Einspruch: **03.07.1996**
(45) Hinweis auf die Patenterteilung: 02.03.1994
(21) Anmeldenummer: 91115722.0
(22) Anmeldetag: 17.09.1991
(51) Int. Cl.: B65G 53/46, B65G 65/48

(54) **Kupplung für eine trennbare Antriebsverbindung zwischen einer Antriebswelle und einer Zellenradwelle einer Zellenradschleuse**
Separable coupling between driving shaft and wheel shaft of a rotary valve
Raccord séparable entre l'arbre d'entraînement et l'arbre de la roue d'une vanne à roue cellulaire

(30) Priorität: 30.11.1990 DE 4038245
(43) Veröffentlichungstag der Anmeldung: 03.06.1992
(73) Patentinhaber: MOTAN VERFAHRENSTECHNIK GMBH & CO., D-88250 Weingarten (DE)
(72) Erfinder: Heep, Dieter, W-7961 Bergatreute (DE); Isopp, Gottfried, D-7982 Baindt (DE)
(74) Vertreter: Riebling, Peter, Dr.-Ing., Patentanwalt

(56) Entgegenhaltungen:
- DE-A- 2 659 450
- DE-C- 3 818 145
- DE-U- 7 510 127
- Ritter, Joachim, WAS HÜLSENFREILÄUFE KÖNNEN, Sonderdruck aus "KE Spezial", Verlag moderne Industrie, Juli 1987
- "Hülsenfreiläufe, Baureihen HF, HF..KF, HF..R, HF..KFR, Hülsenfrei-läufe mit Lagerung, Baureihen HFL, HFL..KF, HFL..R, HFL..KFR", Druckschrift HFL der Fa. INA Wälzlager Schaeffler KG, S. 13, Februar 1990

## Beschreibung

Die Erfindung betrifft eine Kupplung für eine Zellenradschleuse der im Oberbegriff des Anspruchs 1 genannten Art (J.B. DE-U- 7510 127).

Derartige Zellenradschleusen sind bekannt und werden in Anlagen zur Handhabung von Schüttgut für die verschiedensten Zwecke benutzt.

Als Schlüsselbausteine im Schüttgutfluß müssen die Schleusen nicht nur periodisch zur Inspektion und/oder Wartung auseinandergebaut werden, sondern häufig zusätzlich auch bei jedem Wechsel des Schüttgutes, insbesondere beim Handling von Farbgranulat zur Reinigung geöffnet werden.

Da das Zellenrad von der Antriebswelle getrennt werden muß, die aus Zeit- und Aufwandsgründen in der montierten Kombination Antriebseinheit-Seitendeckel-Gehäuse verbleibt, wird als klassische Lösung zur Verbindung des Zellenradwellenstummels mit der Antriebswelle eine Paßfeder-Nutverbindung benutzt.

Es hat sich herausgestellt, daß beim Wiedereinbau des Zellenrades ins Gehäuse die Übereinstimmung von Nut und Passfeder dem Gefühl und Augenmaß des montierenden Servicepersonals überlassen bleibt, da beim Zusammenbau das Zusammentreffen von Nut und Paßfeder im Inneren der Zellenradschleuse erfolgt und eine sofortige Korrektur zur Übereinstimmung nicht zulässt.
Beschädigungen von Nut und Paßfeder sind die Folge.

Um Zufälligkeiten auszuschließen, wurden Zahnkranzverbindungen geschaffen, die aufgrund der vielen Zähne und Zahnflankenschrägen das Kuppeln von Antriebswelle und Zellenrad vereinfachen sollten. Abgesehen von den hohen Kosten der individuellen Herstellung stellte die Rostschutzherabsetzung beim Härten der Zahnflanken einen unerwünschten Nebeneffekt dar, der nicht in allen Bereichen der Schüttguthandhabung akzeptiert werden konnte.

In der DE-PS 38 18 145 wird zwar eine Hilfsvorrichtung beschrieben, aber auf die Probleme der Kupplung nicht eingegangen.

In dem Sonderdruck "Was Hülsenfreiläufe können", Joachim Ritter, Sonderdruck aus "KE Spezial", Verlag moderne Industrie, 7/1987, werden verschiedene Eigenschaften von Hülsenfreiläufen beschrieben. Diese Freiläufe sind durch Reibung kraftschlüssig arbeitende Kupplungen, die ein Drehmoment nur in einem Drehsinn übertragen bzw. aufnehmen können. Der Schaltvorgang wird durch eine relative Drehbewegung zwischen der Antriebsseite und der Abtriebsseite bewirkt. Die Verwendung derartiger Hülsenfreiläufe war bisher bei Zellenradschleusen nicht bekannt.

Der Erfindung liegt die Aufgabe zugrunde, eine Zellenradschleuse der einleitenden Gattung zu schaffen, deren Zellenrad vergleichsweise rasch, komfortabel und sicherausgebaut und wieder eingebaut werden kann.

Diese Aufgabe ist erfindungsgemäss durch die im kennzeichnenden Teil des Patentanspruchs 1 angegebenen Merkmale gelöst.

Bei dieser so ausgebildeten Zellenradschleuse wird der Wellenstummel der Antriebswelle mit einem Hülsenfreilauf, vorzugsweise eingebaut in der Zellenradwelle nach dem Einstecken durch Starten des Motors, gekuppelt.

Diese problemlösende Methode könnte eingeschränkt werden durch die Gefahr, daß Schüttgutpartikel beim Heraussziehen des Zellenrades aus dem zu reinigenden Gehäuse in die Innenbohrung der Zellenradwelle zum Hülsenfreilauf gelangen und dessen Funktion gefährden könnte.

Gegen diese Möglichkeiten wurde folgende Vorkehrung getroffen.

Hinter dem Hülsenfreilauf sitzt in der Zellenradwelle ein federbelasteter Verdrängungsbolzen, der beim Herausziehen des Zellenrades den freien Platz des Wellenstummels der Antriebswelle einnimmt und so eine Verschmutzung des Hülsenfreilaufes verhindert.

Beim Wiedereinschieben des Zellenrades in das Gehäuse trifft der Wellenstummel auf die Stirnseite des Verdrängerbolzens und schiebt diesen gegen die bescheidene Federkraft hinter den Hülsenfreilauf zurück. Dies geschieht automatisch und ohne Kontrolle des Servicepersonals, da das Suchen einer Kupplungsposition im nicht kontrollierbaren Innern der Schleuse entfällt. Die Tätigkeit bleibt auf das Einschieben des Zellenrades und das Festschrauben des Seitendeckels beschränkt.

Wesentliches Merkmal der vorliegenden Erfindung ist also, daß keine Kupplung zwischen der Zellenradwelle und der Antriebswelle über eine Nut-Passfeder-Verbindung erfolgt, sondern daß erfindungsgemäss ein Hülsenfreilauf verwendet wird, der im wesentlichen aus einer Hülse besteht, die mit ihrem Außenumfang in einer Presspassung in einer Innenbohrung der Zellenradwelle eingepasst ist, währenddessen im gekuppelten Zustand die Antriebswelle 4 in den Hülsenfreilauf hineingreift und dort reibschlüssig mit den Nadeln des Hülsenfreilaufs verbunden ist.

Kennzeichnend für diese Kupplungstechnik ist, daß in der einen Drehrichtung die Nadeln radial einwärts in die Hülse des Hülsenfreilaufs hineinverdrängt werden, wodurch die Antriebswelle in der einen Drehrichtung frei in Bezug zur Zellenradwelle verdreht werden kann.

Wird jedoch die Antriebswelle in der anderen Drehrichtung verdreht, dann wälzen sich die Nadeln in der Hülse des Hülsenfreilaufs auf entsprechend jeder Nadel zugeordneten Kurvenbahnen ab, wobei jede Kurvenbahn sich in Richtung zum Drehzentrum der Hülse konisch verengt. Dadurch wird jede Nadel in Richtung zum Drehzentrum radial einwärts verdrängt, legt sich somit klemmend an den Außenumfang der Antriebswelle an und nimmt diese Antriebswelle mit.

Damit besteht also der wesentliche Vorteil, daß eine einfache Kupplung zwischen der Zellenradwelle und der Antriebswelle vorgesehen ist, bei der man nicht mehr bei der Herstellung der Kupplung zwischen den beiden Wellen auf eine formschlüssige Verbindung achten muß. D.h. es kommt nicht mehr auf eine winkelgerechte Einbaulage der Antriebswelle in Richtung zur Zellenradwelle an, sondern die Antriebswelle kann in einer beliebigen Drehlage in diesen Hülsenfreilauf eingeschoben werden und es kommt dann sicher zu einer Kupplung.

In einer bevorzugten Weiterbildung der Erfindung ist es nach Anspruch 2 vorgesehen, daß der genannte Hülsenfreilauf bei aus dem Hülsenfreilauf entfernter Antriebswelle von Verunreinigungen freigehalten wird. Zu diesem Zweck ist ein federbelasteter Bolzen vorgesehen, der in einer Innenbohrung der Zellenradwelle federbelastet eingebaut ist und unter Federkraft in den Innendurchmesser des Hülsenfreilaufs eingreift, sobald die Antriebswelle aus diesem Innendurchmesser des Hülsenfreilaufs entfernt wird. Dadurch wird der vorher von der Antriebswelle ausgefüllte Innenraum des Hülsenfreilaufs durch den federbelasteten Bolzen ausgefüllt und somit ist dieser Innenraum des Hülsenfreilaufs gegen Verschmutzungen abgedichtet.

In einer weiteren bevorzugten Ausführungsform der vorliegenden Erfindung nach Anspruch 3 ist im übrigen vorgesehen, daß man mit Hilfe dieses federbelasteten Bolzens auch gleich eine einfache Ausbaumöglichkeit für den Hülsenfreilauf erhält. Der Hülsenfreilauf ist - wie dargestellt - in einer Presspassung in einer Bohrung der Zellenradwelle aufgenommen. Um den Hülsenfreilauf im Falle der Beschädigung aus dieser Presspassung ausbauen zu können, ist eine Abdrückschraube vorgesehen, die in eine stirnseitige Gewindebohrung im Bolzen eingreift und sich mit ihrem bolzenseitigen Ende an der hinteren Stirnseite der Zellenradwelle anlegt.

Beim Einschrauben dieser Abdrückschraube wird somit der Bolzen in axialer Richtung der Zellenradwelle nach vorne in Richtung zur Antriebswelle 4 bewegt, wodurch dann dieser Bolzen miteinem daran angeordneten radial umlaufenden Absatz den Hülsenfreilauf 7 ebenfalls in axialer Richtung aus der Mittenbohrung der Zellenradwelle herausdrückt.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander. Alle in den Unterlagen - einschließlich der Zusammenfassung - offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von lediglich einen Ausführungsweg darstellende Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: schematisiert im Schnitt eine Darstellung der Antriebswelle und der Zellenradwelle im gekuppelten Zustand,
- Figur 2:: die Darstellung nach Figur 1 im entkuppelten Zustand,
- Figur 3:: eine Zusammenstellungszeichnung der wichtigsten Teile des Drehantriebes einer Zellenradschleuse;
- Figur 4:: schematisiert die Funktion des Hülsenfreilaufs.

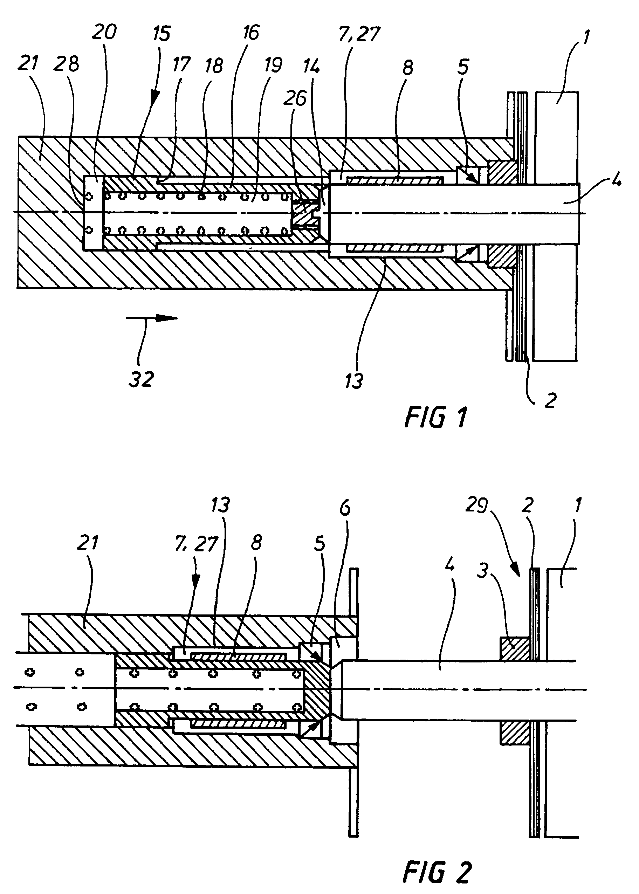

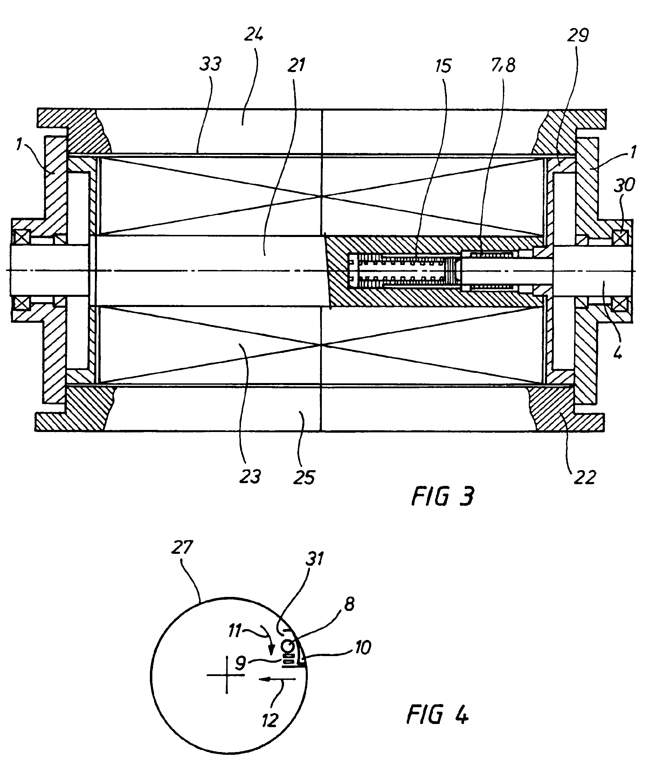

Gemäss den Figuren 1 und 3 besteht die Zellenradschleuse im wesentlichen aus jeweils einander gegenüberliegenden Seitendeckeln 1, wobei der rechte Seitendeckel 1 über ein Wälzlager 30 auf einer Antriebswelle 4 sitzt, die 4 drehbar in dem Wälzlager 30 aufgenommen ist. Die Antriebswelle 4 greift mit einem abgesetzten Teil eine Innenbohrung 20 der Zellenradwelle 21 ein (s. Figur 1). Zur Herstellung einer gegen Drehung gesicherten Kupplung ist ein Hülsenfreilauf 7 vorgesehen.

Der Hülsenfreilauf 7 besteht gemäss den Figuren 1,2 und 4 aus eineräußeren Hülse 27, die in einer Presspassung 13 am vorderen in Figur 1 linken Ende der Innenbohrung 20 aufgenommen ist.

In der Art eines Nadelkäfigs 31 sind in dem Hülsenfreilauf 7 eine Anzahl von Nadeln 8 (vergl. Figur 4) gleichmässig am Umfang verteilt angeordnet, wobei sich jede Nadel 8 auf einer Kurvenbahn abwälzen kann, die eine Schräge 10 bildet, die sich radial einwärts konisch verengt. Jede Nadel 8 wird durch eine Blattfeder 9 in ihrem Nadelkäfig 31 in radial auswärts gestellter Lage gehalten.

Wird nun die Antriebswelle 4 in die Innenbohrung 20 des Hülsenfreilaufs 7 eingeschoben, dann geht dies ohne großen Widerstand, denn die Nadeln 8 sind durch die Kraft der Federn 9 radial auswärts gehalten.

Zur Erleichterung des Einführens des stirnseitigen Endes der Antriebswelle 4 ist ihre Stirnseite als Konus 14 ausgebildet.

Die Antriebswelle 4 kann also ohne großen Widerstand in die Innenbohrung des Hülsenfreilaufs 7 eingeführt werden.

Sobald die Antriebswelle 4 in Pfeilrichtung 11 verdreht wird, wird die jeweilige Nadel 8 entgegen der Kraft der Feder 9 auf der Kurvenbahn abgewälzt und gelangt somit auf die Schräge 10 und wird radial einwärts in Pfeilrichtung 12 verdrängt. Dadurch kommt es zu einem Klemmeffekt zwischen den Nadeln 8 des Hülsenfreilaufs 7 und der Antriebswelle 4.

Nachdem der Hülsenfreilauf 7 in der besagten Presspassung 13 im Bereich der Innenbohrung 20 im Bereich der Zellenradwelle 21 gehalten ist, kommt es hiermit zu einer gegen Drehung gesicherten Kupplung beider Wellen 4,21.

Wichtig hierbei ist, daß die Antriebswelle 4 in jeder beliebigen Drehlage in den Hülsenfreilauf 7 eingeführt werden kann, so daß es also nicht mehr auf einen winkelgenauen Einbau der Antriebswelle 4 in die Zellenradwelle 21 ankommt, wie es vorher bei der beschriebenen Nut-Feder-Passung notwendig war.

Es wird noch erwähnt, daß vor dem Hülsenfreilauf 7 in Richtung zur Antriebswelle 4 ein Wellendichtring 5 angeordnet ist und daß auf der Antriebswelle 4 ein Dichtsystem 29 der Zellenradschleuse angeordnet ist, welches im wesentlichen aus einer Dichtscheibe 2 und einer damit verbundenen Gleithülse 3 besteht. Die Gleithülse 3 ist drehfest mit der Antriebswelle 4 verbunden.

Die Gleithülse 3 greift hierbei in einen Zentrierabsatz 6 in den Bereich der Innenbohrung 20 der Zellenradwelle 21 ein. Damitwird in gekuppeltem Zustand die Nadelanordnung des Hülsenfreilaufs 7 von Lagerkräften befreit, weil die Lagerkräfte durch die Gleithülse 3 aufgenommen werden. Der Hülsenfreilauf 7 dient also nur zur drehfesten Kupplung der beiden Wellen 4,21 und hat keinerlei Traglasten zu übernehmen.

Gemäss Figur 2 ist ein federbelasteter Bolzen 15 vorgesehen, dar innerhalb der Zellenradwelle 21 angeordnet ist. Beim Herausziehen des Zellenrades aus dem Schleusengehäuse 22 wird dieser Bolzen 15 von einer Feder zur Seite der Zellenradwelle 21 hin gedrückt. Hierdurch wird verhindert, daß in entkuppeltem Zustand Partikel in den Innenraum des Hülsenfreilaufs eindringen können.

Der federbelastete Bolzen 15 besteht im wesentlichen aus einem vorderen, abgesetzten Bolzenteil 16, der in seinem hinteren, axialen Ende in einen Bund 17 vergrößerten Durchmessers übergeht.

Der Außendurchmesser des Bolzenteils 16 ist so bemessen, daß er passend und dichtend in dem Innenumfang des Hülsenfreilaufs 7 eingreift, wenn die Antriebswelle 4 gemäss Figur 2 aus dem Innenumfang des Hülsenfreilaufs 7 entfernt ist. Hierbei wird der Bolzen 15 durch eine Druckfeder 18 in Pfeilrichtung 32 vorgespannt, wobei die Druckfeder 18 sich mit ihrem einen Ende an der Stirnseite der Bohrung 19 des Bolzens 15 anlegt und sich mit ihrem anderen Ende an der Stirnseite 28 der Innenbohrung 20 der Zellenradwelle 21 abstützt.

Sobald also die Antriebswelle 4 aus der Innenbohrung des Hülsenfreilaufs 7 entfernt wird, wird der Bolzen 15 in Pfeilrichtung 32 unter der Kraft der Druckfeder 18 in die Innenbohrung des Hülsenfreilaufs 7 eingeschoben und deckt somit diese Innenbohrung abgedichtet gegen Verschmutzungen ab.

Ergänzend sei noch angemerkt, daß in dem Bolzen 15 eine axiale Entlüftung vorgesehen ist, damit es nicht zu einem Saugeffekt in der Innenbohrung 20 der Zellenradwelle 21 kommt.

Um den Hülsenfreilauf 7 leicht aus der Presspassung 13 entfernen zu können, ist zunächst in der vorderen Stirnseite des Bolzens 15 eine Madenschraube 26 in einer Gewindebohrung angeordnet. Zum Ausbau des Hülsenfreilaufs 7 wird die Madenschraube 26 aus der Gewindebohrung entfernt und stattdessen wird ein Abdrückschraube (nicht zeichnerisch dargestellt) eingesetzt, deren axiale Länge 2 x der axialen Länge der Innenbohrung 20 der Zellenradwelle 21 entspricht. Diese Abdrückschraube wird in das Innengewinde in der Stirnseite des Bolzens 15 eingeschraubt und drückt sich dann mit ihrem bolzenseitigen Ende an der Stirnseite 28 im Bereich der Innenbohrung 20 ab. Beim Einschrauben der Abdrückschraube wird somit der Bolzen 15 in Pfeilrichtung 32 axial nach außen bewegt und der Bund 17 kommt dann in Kontakt mit der zugeordneten einwärts gerichteten Stirnseite des Hülsenfreilaufs 7, wodurch dann die beiden Teile durch weitere Betätigung der Abdrückschraube in Pfeilrichtung 32 aus der Innenbohrung 20 axial entfernt werden. Auf diese Weise ist eine einfache Ausbaumöglichkeit für den Hülsenfreilauf 7 gegeben.

In Figur 3 sind in Zusammenstellung noch die wesentlichsten Teile einer Zellenradschleuse gezeigt. Sie besteht im wesentlichen aus einem Einlauf 24 und einem Auslauf 25, die an einem Schleusengehäuse 22 angeordnet sind. Die Zellenradwelle 21 ist drehfest in an sich bekannter Weise mit Zellenradstegen 23 verbunden, die in der Gehäusebohrung 33 umlaufen.

Aus Figur 3 ist der gekuppelte Zustand zwischen der Antriebswelle 4 und der Zellenradwelle 21 zu entnehmen.

In der vorstehenden Beschreibung wurde dargelegt, daß die drehfeste Kupplung zwischen der Antriebswelle 4 und der Zellenradwelle 21 im Bereich einer Innenbohrung 20 der Zellenradwelle 21 mit einem Hülsenfreilauf 7 erfolgt. Selbstverständlich fällt es in den Rahmen der vorliegenden Erfindung, auch die kinematische Umkehrung zu verwirklichen, d.h. die Innenbohrung 20 ist im Bereich der Antriebswelle 4 angeordnet und in diesem Bereich ist der Hülsenfreilauf 7 angeordnet und die Zellenradwelle 21 greift dann mit einem entsprechenden Zapfen in die Innenbohrung der Antriebswelle 4 ein. Ansonsten werden alle beschriebenen Teile, insbesondere der Bolzen 15, in analoger Weise verwendet.

Der Hülsenfreilauf ist so dimensioniert, daß er auf eine doppelte Drehmomentenlast ausgerichtet ist, wenn man davon ausgeht, daß der Motor eine einfache Drehmomentlast übertragen kann.

## Patentansprüche

1. Kupplung für eine trennbare Antriebsvorrichtung zwischen einer Antriebswelle (4) und einer Zellenradwelle (21) einer Zellenradschleuse, wobei mit der Antriebswelle (4) ein Seitendeckel (1) der Zellenradschleuse verbunden ist und die Antriebswelle (4) in dem Seitendeckel (1) drehbar gelagert ist (Wälzlager 30), **dadurch gekennzeichnet**, daß die Kupplung als Hülsenfreilauf (7) ausgebildet ist, wobei der Hülsenfreilauf in einer Innenbohrung der Zellenradwelle oder der Antriebswelle eingesetzt ist und so ausgebildet ist, daß ein Zapfen der Antriebswelle oder der Zellenradwelle in jeder beliebigen Drehlage in den Hülsenfreilauf eingeführt werden kann und in einer Axialbohrung (20) der Zellenradwelle (21) ein Bolzen (15) vorgesehen ist, der federbelastet (Druckfeder 18) in Richtung der Antriebswelle (4) vorgespannt ist.

2. Kupplung nach Anspruch 1, **dadurch gekennzeichnet**, daß eine Abdrückschraube vorgesehen ist, die in eine stirnseitige Gewindebohrung des Bolzens (15) eingreift und die sich mit ihrem einen Ende an die benachbarte Stirnseite der Zellenradwelle (21) anlegt.

## Claims

1. A coupling for a separable drive device between a drive shaft (4) and a bucket wheel shaft (21) of a bucket wheel sluice, in which a side cover (1) of the bucket wheel sluice is connected with the drive shaft (4) and the drive shaft (4) is rotatably mounted in the side cover (1) (roller bearing 30), characterised in that the coupling is constructed as a socket free-runner (7), in which the socket free-runner is inserted in an internal bore of the bucket wheel shaft or of the drive shaft and is constructed such that a pin of the drive shaft or of the bucket wheel shaft can be introduced in any desired rotational position into the socket free-runner and in an axial bore (20) of the bucket wheel shaft (21) a bolt (15) is provided, which is pre-stressed in a spring-loaded manner (compression spring 18) in the direction of the drive shaft (4).

2. A coupling according to Claim 1 characterised in that a set screw is provided, which engages into a threaded bore of the bolt (15) in the end face and which rests with one end against the adjacent end face of the bucket wheel shaft (21).

## Revendications

1. Accouplement pour un dispositif d'entraînement séparable entre un arbre d'entraînement (4) et un arbre de roue cellulaire (21) d'une vanne à roue cellulaire, étant précisé qu'un couvercle latéral (1) de la vanne est relié à l'arbre d'entraînement (4) et que celui-ci est monté en rotation dans le couvercle latéral (1) (palier de roulement 30), caractérisé en ce que l'accouplement est conçu comme une roue libre à manchon (7), laquelle est placée dans un perçage intérieur de l'arbre de roue cellulaire ou de l'arbre d'entraînement et est conçue de telle sorte qu'un tourillon de l'arbre d'entraînement ou de l'arbre de roue cellulaire puisse être introduit dans n'importe quelle position de rotation dans la roue libre à manchon, et il est prévu, dans un perçage axial (20) de l'arbre de roue cellulaire (21), un axe (15) qui est précontraint par une sollicitation élastique (ressort de compression 18) en direction de l'arbre d'entraînement (4).

2. Accouplement selon la revendication 1, caractérisé en ce qu'il est prévu un boulon à chasser qui vient en prise dans un perçage fileté, situé côté frontal, de l'axe (15) et qui s'appuie avec une extrémité contre la face frontale voisine de l'arbre de roue cellulaire (21).
